# EUROPÄISCHE PATENTANMELDUNG

(11) **EP 1 510 915 A1**
(43) Veröffentlichungstag der Anmeldung: **02.03.2005**
(21) Anmeldenummer: 03019267.8
(22) Anmeldetag: 26.08.2003
(51) Int. Cl.: G06F 9/24

(54) **Vorrichtung und Verfahren zur Anpassung einer Hardware-Plattform an beliebige Applikationsprogramme**

(71) Anmelder: SIEMENS AKTIENGESELLSCHAFT, 80333 München (DE)
(72) Erfinder: Bitterlich, Jean-Yves, 81549 München (DE); Schlichte, Marc, 81379 München (DE)

(57) **Zusammenfassung**

Die Erfindung betrifft eine Vorrichtung zur Anpassung einer Hardware-Plattform (1) an beliebige Applikationsprogramme mit einer Applikations-Erfassungseinheit (4) zum Erfassen eines jeweiligen Applikationstyps eines abzuarbeitenden Applikationsprogramms (3), einer Mikrocode-Datenbank (5) zum Speichern einer Vielzahl von Mikrocode-Paketen für eine Vielzahl von Applikationstypen und einer Mikrocode-Auswahleinheit (6) zum Suchen eines geeigneten Mikrocode-Pakets in Abhängigkeit vom erfassten Applikationstyp, zum Laden des geeigneten Mikrocode-Pakets in die Hardware-Plattform (1) und zum Starten einer Abarbeitung des Applikationsprogramms vom erfassten Applikationstyp. Auf diese Weise können die unterschiedlichsten Applikationsprogramme auf einer gemeinsamen Hardware-Plattform realisiert werden.

## Beschreibung

Die vorliegende Erfindung bezieht sich auf eine Vorrichtung und ein Verfahren zur Anpassung einer Hardware-Plattform an beliebige Applikationsprogramme und insbesondere auf eine Vorrichtung und ein Verfahren zur Aktualisierung von Mikrocode-updatefähigen Prozessoren in mobilen Telekommunikationsendgeräten.

Üblicherweise sind Applikationsprogramme bzw. sogenannte Anwendungsprogramme nur auf einer vorbestimmten Art von Computer-Plattformen oder Hardware-Plattformen lauffähig, weshalb sie von unterschiedlichen Computersystemen nicht abgearbeitet werden können. Eine Software bzw. ein vorbestimmtes Applikationsprogramm, welches beispielsweise für einen Minicomputer mit einem Unix-Betriebssystem und einer entsprechenden Hardware-Plattform geschrieben und kompiliert wurde, ist demzufolge nicht auf einem mobilen Telekommunikationsendgerät lauffähig, welches beispielsweise ein proprietäres Betriebssystem mit einer anderen Hardware-Plattform verwendet.

Eine Computer-Plattform weist üblicherweise ein Betriebssystem (OS, Operating System) und eine Hardware-Plattform auf. Beispiele für Betriebssysteme sind die Microsoftbetriebssysteme: MS-DOS®, Windows® 95, Windows® 98, Windows® 2000 und Windows® NT. Beispiele für Hardware-Plattformen sind beispielsweise die Intel® Mikroprozessoren: 80286, Pentium®, Pentium® II, Pentium® III und Itanium®.

Neben diesen Mikroprozessoren der Firma Intel® existieren zur Realisierung einer Hardware-Plattform jedoch noch eine Vielzahl von weiteren Mikroprozessoren wie beispielsweise XScale, StrongARM, ARM oder Draggonball.

Sobald ein Benutzer eine Anwendungssoftware bzw. ein Applikationsprogramm starten will, welches nicht für eine vorgegebene Hardware-Plattform geschrieben wurde, wird eine Fehlermeldung erzeugt, wonach diese Anwendung nicht derart geschrieben bzw. kompiliert wurde, dass sie aus dieser Hardware-Plattform lauffähig ist.

Ferner unterstützen eine Vielzahl von Hardware-Plattformen nicht nur binäre Applikationsprogramme, sondern auch sogenannte virtuelle oder emulierte Anwendungsprogramme wie beispielsweise JAVA-Applikationsprogramme. Hierbei ist die Emulation der Hardware-Plattform bzw. des Prozessors relativ langsam. Beispielsweise wird auf Hardware-Plattformen, auf denen JAVA durchgeführt werden soll, eine Art von Co-Prozessor installiert, der Teile der Befehlskonvertierung übernimmt.

Die vorstehend beschriebenen Probleme werden derzeit nur teilweise gelöst und darüber hinaus in der Regel nur statisch.

Demzufolge existieren Hardware-Plattformen, welche derzeit zwei Sätze von Befehlscodes unterstützen. Ein derartiger Prozessor ist beispielsweise der ARM-Jazelle-Prozessor, der sowohl den ARM-Code als auch 85 % des JAVA-Codes unterstützt. Diese Befehlssätze sind hierbei fest verdrahtet (hard-wired) und ermöglichen somit nicht die Realisierung von weiteren Assemblercodes bzw. zugehörigen Applikationsprogrammen.

Darüber hinaus wurden auf dem Gebiet der FPGAs (Field Programmable Gate Areas) Untersuchungen dahingehend angestellt, dass eine bedarfsweise Rekonfiguration zur Anpassung von einer Hardware-Plattform oder einer anderen Hardware-Plattform ermöglicht ist. Derartige FPGAs haben jedoch den Nachteil, dass sie im Vergleich zu Mikrocode-programmierten Prozessoren sehr langsam sind.

Die am weitesten verbreitete Form der Anpassung einer Hardware-Plattform an eine Vielzahl von Applikationsprogrammen besteht darin, eine Zwischen-Befehlssatz-Konverterschicht (Intermediate Instructions Set Converter Layer) wie beispielsweise eine sogenannte "Virtual Machine" im Falle von JAVA oder eine Emulationsschicht einzufügen, auf der beispielsweise alte bzw. frühere Computersoftware bzw. Applikationsprogramme lauffähig sind. Derartige Realisierungen sind jedoch relativ langsam.

Demgegenüber liegt der vorliegenden Erfindung die Aufgabe zugrunde, eine Vorrichtung und ein Verfahren zur Anpassung einer Hardware-Plattform an beliebige Applikationsprogramme zu schaffen, welche eine hohe Verarbeitungsgeschwindigkeit aufweist und darüber hinaus kostengünstig ist.

Erfindungsgemäß wird diese Aufgabe hinsichtlich der Vorrichtung durch die Merkmale des Patentanspruchs 1 und hinsichtlich des Verfahrens durch die Maßnahmen des Patentanspruchs 10 gelöst.

Insbesondere durch die Verwendung einer Mikrocode-Datenbank zum Speichern einer Vielzahl von Mikrocode-Paketen für eine Vielzahl von Applikationstypen, einer Applikations-Erfassungseinheit zum Erfassen eines jeweiligen Applikationstyps eines abzuarbeitenden Applikationsprogramms und einer Mikrocode-Auswahleinheit zum Suchen eines geeigneten Mikrocode-Pakets in Abhängigkeit vom erfassten Applikationstyp, zum Laden des geeigneten Mikrocode-Pakets in die Hardware-Plattform und zum Starten einer Abarbeitung des Applikationsprogramms vom ersten Applikationstyp können die unterschiedlichen Applikationsprogramme durch eine einzige Hardware-Plattform mit sehr hoher Geschwindigkeit abgearbeitet werden. Ferner kann dadurch der Energieverbrauch wesentlich verringert werden, weshalb sie insbesondere für batteriebetriebene mobile Endgeräte wie beispielsweise Handys geeignet ist.

Vorzugsweise kann auch das Betriebssystem eine Vielzahl von den jeweiligen Applikationstypen entsprechenden Betriebssystemmodulen aufweisen und in Abhängigkeit vom erfassten Applikationstyp verwendet werden. Auf diese Weise erhält man eine äußerst effektive Computer-Plattform bestehend aus einem Mehrfach-Betriebssystem und einer anpassungsfähigen Hardware-Plattform. Insbesondere Applikationsprogramme, die nicht unmittelbar auf der Hardware-Plattform ablauffähig sind, sondern darüber hinaus wesentliche Unterstützung vom Betriebssystem erfordern, können dadurch ebenfalls abgearbeitet werden.

Als physikalisches Gerät der Hardware-Plattform werden vorzugsweise Mikrocode-updatefähige Prozessoren wie beispielsweise der Intel® Prozessor Pentium® III oder der Crusoe™-Prozessor von Transmetta Corp. verwendet. Da derartige Prozessoren bereits eine Mikrocode-Updatefähigkeit aufweisen, ist eine Realisierung der Anpassung einer Hardware-Plattform besonders einfach zu realisieren.

Vorzugsweise realisieren die Mikrocode-Pakete eine Zuordnung von einer Vielzahl von Assemblercodes wie beispielsweise Intel® 80286, ARM, MIPS usw. zu einem vorgegebenen Mikrocode eines jeweiligen Prozessors wie beispielsweise einem Intel® Prozessor Pentium® III.

Obwohl die Mikrocode-Auswahleinheit vorzugsweise ein geeignetes Mikrocode-Paket aus einer internen Mikrocode-Datenbank auswählt, kann darüber hinaus bei fehlender Eignung über ein Telekommunikationsnetzwerk wie beispielsweise das Internet ein geeignetes Mikrocode-Paket gesucht und geladen werden. Auf diese Weise können auch zukünftige Applikationsprogramme über eine zentral in einem Netzwerk vorhandene Datenbank jederzeit lauffähig gemacht werden.

Vorzugsweise wird das geeignete Mikrocode-Paket dynamisch in Abhängigkeit von einem als Nächstes abzuarbeitenden Applikationsprogramm auf der Hardware-Plattform aktualisiert, wodurch sich insbesondere sogenannte Multi-Tasking-Anwendungen für verschiedenste Applikationen von unterschiedlichen Applikationstypen realisieren lassen.

Vorzugsweise wird der Applikationstyp an Hand der Verwaltungsdaten bzw. eines sogenannten Applikations-Headers des Applikationsprogramms bestimmt, weshalb sich ein jeweils geeignetes Mikrocode-Paket besonders einfach bestimmen lässt.

Hinsichtlich des Verfahrens wird vorzugsweise zunächst ein Applikationstyp eines abzuarbeitenden Applikationsprogramms erfasst, anschließend ein geeignetes Mikrocode-Paket in Abhängigkeit vom erfassten Applikationstyp gesucht und zur Aktualisierung der Hardware-Plattform geladen, um abschließend das Applikationsprogramm auf der aktualisierten Hardware-Plattform abzuarbeiten.

In den weiteren Unteransprüchen sind weitere vorteilhafte Ausgestaltungen der Erfindung gekennzeichnet.

Die Erfindung wird nachstehend an Hand eines Ausführungsbeispiels unter Bezugnahme auf die Zeichnung näher beschrieben.

Es zeigen:
- Figur 1: eine vereinfachte Darstellung zur Veranschaulichung eines Schicht-Systems in einer Computer-Plattform;
- Figur 2: eine vereinfachte Blockdarstellung einer Vorrichtung zur Anpassung einer Hardware-Plattform an beliebige Applikationsprogramme;
- Figur 3: ein vereinfachtes Flussdiagramm zur Veranschaulichung wesentlicher Schritte des Verfahrens zur Anpassung einer Hardware-Plattform an beliebige Applikationsprogramme; und
- Figur 4: ein erfindungsgemäßes Applikations-Ladeprogramm.

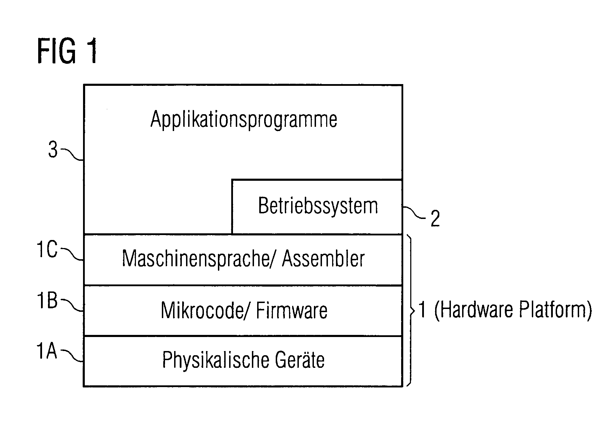

Figur 1 zeigt eine vereinfachte Darstellung eines Schicht-Systems, wie es üblicherweise in Computer-Plattformen vorliegt.

Gemäß Figur 1 sind mit 1A die physikalischen Geräte wie z.B. eine Stromversorgung, Platten, Drähte, integrierte Schaltungen und insbesondere die zur Verfügung stehenden Mikroprozessoren bezeichnet. Diese physikalische Schichtebene stellt sozusagen die unterste Schichtebene dar. Zur Ansteuerung dieser physikalischen Geräte dient eine Mikrocode-/Firmware-Schicht 1B, die sozusagen eine "primitive" Software darstellt und sich teilweise direkt auf den physikalischen Geräten befindet. Dieser Mikrocode bzw. diese Firmware bietet der nächsten Schicht eine einheitlichere Schnittstelle zu den physikalischen Geräten und verbirgt bereits etwas von den Details der direkten Gerätesteuerung. Daran anschließend befindet sich die Maschinensprache bzw. der Assemblercode 1C, der im Wesentlichen die Schnittstelle zwischen der Hardware-Plattform 1, bestehend aus der physikalischen Geräteschicht 1A, der Mikrocodeschicht 1B und der Maschinensprache 1C, und der darüberliegenden eigentlichen Software. Die Maschinensprache weist beispielsweise 50 bis 300 Befehle wie z.B. ADD, MOVE, JUMP, usw. auf, wobei die meisten Befehle bzw. Instruktionen einem Bewegen, Laden und Speichern von Daten im Hauptspeicher und in den Registern, dem Ausführen von arithmetischen Operationen oder dem Vergleichen von Werten dienen. Üblicherweise besitzt jede Hardware-Plattform bzw. jeder darin befindliche Mikroprozessor eine bestimmte Maschinensprache bzw. einen bestimmten Assemblercode, in den die vorstehend beschriebenen Applikationsprogramme entsprechend umgewandelt bzw. kompiliert werden.

An die Hardware-Plattform 1 anschließend befindet sich üblicherweise das Betriebssystem bzw. Operation System 2, welches zwischen dem Benutzer bzw. den Benutzerprogrammen (Applikationsprogrammen) und der Hardware-Plattform vermittelt. Das Betriebssystem verbirgt im Wesentlichen die Komplexität der Hardware-Plattform vor dem Programmierer und bietet für das Programmieren angenehmere Befehlsstrukturen. Beispielsweise "read from file" statt "move head of disk 1 to track 231, lower headend ...".

Mit dem Bezugszeichen 3 sind schließlich die eigentlichen Applikationsprogramme bezeichnet, die von Benutzern zur Lösung ihrer Probleme geschrieben, bzw. als Applikationsprogramme auf das Computersystem geladen werden. Hierbei kann ein Teil der Applikationsprogramme sowohl direkt auf die Hardware-Plattform 1 zugreifen, sofern sie in Assemblercode umgewandelt bzw. kompiliert wurde, oder unter Verwendung des Betriebssystems 2 die Hardware-Plattform 1 ansteuern, wobei die komplexeren Befehle des Betriebssystems verwendet werden.

Die vorliegende Erfindung macht sich nunmehr die Eigenschaft von modernen Mikroprozessoren zunutze, wonach die Möglichkeit besteht, den Mikrocode 1B bzw. die zugehörige Umwandlung in die Maschinensprache bzw. den Assemblercode nach Bedarf zu verändern bzw. zu aktualisieren. Derartige mikroprogrammierbare Mikroprozessoren mit Mikrocode-Updatefähigkeit sind beispielsweise der Intel® Mikroprozessor Pentium® III sowie der Crusoe™ von Transmetta Corp., um nur einige wenige zu nennen. Obwohl demzufolge ein Pentium® III Mikroprozessor einen sogenannten P III - Assemblercode aufweist, der in einen entsprechenden Mikrocode zur unmittelbaren Ansteuerung des Mikroprozessors Pentium® III umgewandelt wird, macht die Erfindung von der Mikrocode-Updatefähigkeit des Prozessors Gebrauch und ersetzt je nach zur Verfügung stehendem Applikationsprogramm den Assemblercode bzw. die Maschinensprache 1C sowie den zugehörigen Mikrocode 1B durch ein entsprechendes Mikrocode-Paket. Genauer gesagt wird zur Realisierung eines JAVA-Applikationsprogramms ein Mikrocode-Paket in die Schichten 1C und 1B geladen, die als Assemblercode einen JAVA-Code und als Mikrocode den entsprechend zugeordneten Pentium® III-Mikrocode (P III) aufweist. Auf diese Weise können ohne die üblicherweise vorhandenen Emulatoren, virtuellen Maschinen oder sonstigen komplexen Zwischenlösungen auf einer Hardware-Plattform Applikationsprogramme abgearbeitet werden, die ursprünglich nicht dafür geschrieben bzw. kompiliert wurden.

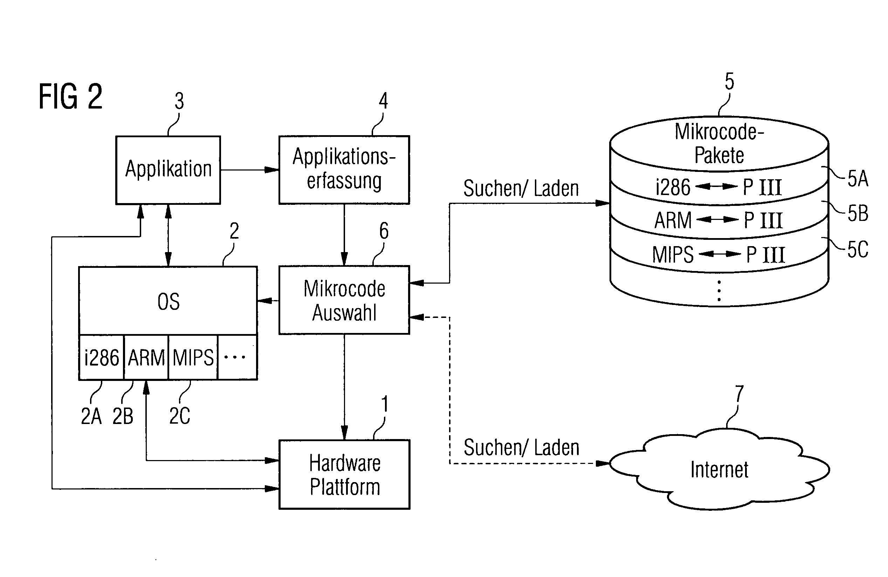

Figur 2 zeigt eine vereinfachte Blockdarstellung einer erfindungsgemäßen Vorrichtung zur Anpassung einer Hardware-Plattform an beliebige Applikationsprogramme, wobei gleiche Bezugszeichen gleiche oder entsprechende Elemente wie in Figur 1 bezeichnen und auf eine wiederholte Beschreibung nachfolgend verzichtet wird.

Gemäß Figur 2 weist die Vorrichtung zur Anpassung der Hardware-Plattform 1 in üblicher Weise ein Betriebssystem (Operating System, OS) 2 zum Vermitteln zwischen der Hardware-Plattform 1 und den Applikationsprogrammen 3 auf. Beispielsweise kann ein Steuerprogramm bzw. sogenannter Scheduler des Betriebssystems 2 die Abarbeitung einer Vielzahl von Applikationsprogrammen durch die Hardware-Plattform 1 steuern.

Eine Applikations-Erfassungseinheit 4 dient im Wesentlichen dem Erfassen eines jeweiligen Applikationstyps der Applikationsprogramme 3. Vorzugsweise wird der Applikationstyp an Hand der Verwaltungsdaten des Applikationsprogramms bzw. dem sogenannten "Application Header" bestimmt. Auf diese Weise können sogenannte .exe, .dll in gleicher Weise aber auch JAVA-Class, ELF- oder sonstige Formate erfassen und demzufolge eine eigentlich gewünschte Hardware-Plattform ableiten. In einer Mikrocode-Datenbank 5 sind nunmehr eine Vielzahl von Mikrocode-Paketen 5A, 5B und 5C für eine Vielzahl von unterschiedlichen Applikationstypen gespeichert. Im vorliegenden Beispiel, bei dem die Hardware-Plattform 1 einen Intel Pentium® III (P III) Mikroprozessor aufweist, realisiert demzufolge das Mikrocode-Paket 5A eine Zuordnung zwischen einem Intel® 80286-Assemblercode und einem Pentium® III-Mikrocode. Andererseits kann im Mikrocode-Paket 5B eine Zuordnung des ARM-Assembler-codes zum Pentium® III-Mikrocode abgelegt sein oder im Mikrocode-Paket eine Zuordnung des MIPS-Assemblercode zum Pentium® III-Mikrocode. Diese Mikrocode-Pakete 5A bis 5C entsprechen somit den Schichten 1C und 1B des Schichten-Systems gemäß Figur 1 und dienen demzufolge einer entsprechenden Codeumwandlung bzw. Code-Konvertierung.

Eine Mikrocode-Auswahleinheit 6 sucht nunmehr in Abhängigkeit vom erfassten Applikationstyp ein geeignetes Mikrocode-Paket in der Mikrocode-Datenbank 5, um es anschließend in die Hardware-Plattform 1 mittels der Mikrocode-Update-Funktionalität zu laden. Genauer gesagt wird beispielsweise für ein Applikationsprogramm, welches in dem i286-Assemblercode geschrieben wurde, das geeignete Mikrocode-Paket 5A aus der Datenbank 5 geladen und über die Prozessor-Update-Funktionalität in den Mikroprozessor bzw. in die Schichtebenen 1B und 1C der Hardware-Plattform 1 geladen. Auf diese Weise besitzt die Hardware-Plattform 1 zur Software hin nicht länger eine Pentium® III-Schnittstelle, sondern eine aktualisierte i286-Schnittstelle, weshalb das in dieser Sprache geschriebene Applikationsprogramm unmittelbar von der Hardware-Plattform 1 ausgeführt werden kann. Zum Starten einer Abarbeitung des Applikationsprogramms vom erfassten Applikationstyp kann beispielsweise ein entsprechendes Signal an das Betriebssystem 2 bzw. den darin realisierten Scheduler bzw. das darin realisierte Steuerprogrammm abgegeben werden.

Obwohl eine Vielzahl von Applikationsprogrammen unmittelbar im Assemblercode geschrieben bzw. umgewandelt sind, benötigen einige dieser Applikationsprogramme auch noch Funktionalitäten des Betriebssystems. Zur Anpassung derartiger Applikationsprogramme kann das Betriebssystem 2 darüber hinaus eine Vielzahl von den jeweiligen Applikationstypen entsprechenden Betriebssystemmodulen 2A, 2B, 2C usw. aufweisen, die in Abhängigkeit von den erfassten Applikationstypen verwendet werden. Für den Fall, dass das im Beispiel beschriebene i286-Applikationsprogramm auch Betriebssystem-Funktionalitäten in Anspruch nimmt, wird von der Mikrocode-Auswahleinheit 6 das Betriebssystem 2 derart angesteuert, dass nunmehr im Wesentlichen das Betriebssystemmodul 2A mit ihrer i286-Funktionalität dem Applikationsprogramm 3 und der Hardware-Plattform 1 zur Verfügung steht.

Obwohl auf diese Weise bereits eine Mehrheit von Applikationsprogrammen auf einer einzigen Hardware-Plattform durchgeführt bzw. abgearbeitet werden kann, besteht gemäß Figur 2 ferner die Möglichkeit, dass die Mikrocode-Auswahleinheit 6 ein geeignetes Mikrocode-Paket über ein Telekommunikationsnetzwerk 7 wie beispielsweise das Internet auswählt bzw. sucht und herunterlädt, wenn die Mikrocode-Datenbank 5 kein geeignetes Mikrocode-Paket für den erfassten Applikationstyp aufweist. Auf diese Weise können von jeweiligen Prozessor-Herstellern oder Software-Herstellern im Internet jeweilige Mikrocode-Pakete zur Verfügung gestellt werden, die eine Lauffähigkeit von nahezu allen möglichen existierenden Applikationsprogrammen auf allen existierenden Hardware-Plattformen ermöglichen.

Vorzugsweise wird die Mikrocode-Auswahleinheit 6 das geeignete Mikrocode-Paket dynamisch in Abhängigkeit von einem als Nächstes abzuarbeitendes Applikationsprogramm auf der Hardware-Plattform 1 aktualisieren, wodurch man insbesondere bei Multi-Tasking-Funktionalitäten erstmalig eine Multi-Tasking-Bearbeitung von Applikationsprogrammen erhält, die für unterschiedliche Hardware-Plattformen geschrieben wurden.

Da Hardware-Plattformen üblicherweise einige sehr spezielle Konfigurationen aufweisen, die nicht mit allen weiteren existierenden Hardware-Plattformen kompatibel sind, kann die Hardware-Plattform 1 ferner ein rekonfigurierbares Bus-Design aufweisen, welches in Abhängigkeit vom Applikationstyp durch die Mikrocode-Auswahleinheit 6 konfiguriert wird.

Auf diese Weise erhält man eine Vorrichtung, die nicht nur die unterschiedlichsten Applikationsprogramme auf einer einzigen Hardware-Plattform wesentlich beschleunigt, sondern darüber hinaus einen stark verbesserten Stromverbrauch aufweist und daher insbesondere für batteriebetriebene mobile Endgeräte von Bedeutung ist. Insbesondere in einem mobilen Telekommunikationsgerät wie beispielsweise einem Handy oder einem PDA (personal digital assistent) können somit die unterschiedlichsten Applikationsprogramme sehr schnell und mit minimalem Stromverbrauch unter Verwendung eines sehr einfachen Systemaufbaus realisiert werden.

Aufgrund der sowohl statisch als auch dynamisch konfigurierbaren Hardware-Plattform besteht demzufolge die Möglichkeit, Applikationsprogramme, wie beispielsweise Atari oder C64-Applikationen zu verwenden, die für alte Hardware-Plattformen entwickelt wurden.

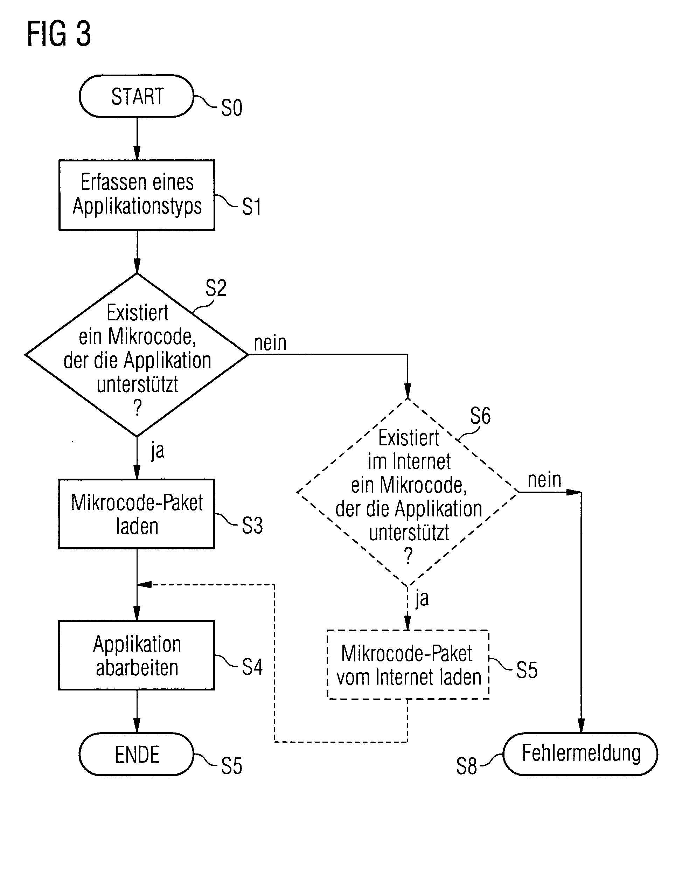

Figur 3 zeigt ein vereinfachtes Flussdiagramm zur Veranschaulichung wesentlicher Schritte bei der Durchführung des Verfahrens zur Anpassung einer Hardware-Plattform an beliebige Applikationsprogramme.

Gemäß Figur 3 wird nach einem Start in Schritt S0 zunächst ein Applikationstyp eines abzuarbeitenden Applikationsprogramms im Schritt S1 erfasst, wobei vorzugsweise der Applikationstyp an Hand der Verwaltungsdaten bzw. des Applikations-Headers des Applikationsprogramms erfasst wird. Anschließend wird in einem Schritt S2 überprüft, ob ein Mikrocode existiert, der die Applikation bzw. den erfassten Applikationstyp unterstützt. Sofern in der Datenbank 5 ein geeignetes Mikrocode-Paket zur Aktualisierung der Hardware-Plattform gefunden wird, wird dieses Mikrocode-Paket in einem Schritt S3 geladen und in einem Schritt S4 ein Abarbeiten des Applikationsprogramms vom erfassten Applikationstyp auf der aktualisierten Hardware-Plattform veranlasst. Das Programm endet anschließend im Schritt S5.

Falls jedoch in Schritt S2 kein geeignetes Mikrocode-Paket lokal gefunden wird, kann optional ferner in einem Schritt S6 ferner über ein Telekommunikationsnetzwerk wie beispielsweise das Internet ein geeigneter Mikrocode gesucht und in einem Schritt S7 heruntergeladen werden, um anschließend in den Schritt S4 zurückzukehren, bei dem das Abarbeiten des Applikationsprogramms durch die aktuliesierte Hardware-Plattform veranlasst wird.

Bei dem Ladevorgang wird das geeignete Mikrocode-Paket vorzugsweise in einem Mikrocode-updatefähigen Prozessor wie einem Intel® Pentium® III-Prozessor oder Crusoe™-Prozessor geladen. Ferner kann in diesem Schritt S3 bzw. S7 auch ein rekonfigurierbares Bus-Design in Abhängigkeit vom Applikationstyp konfiguriert werden. Falls bei der Überprüfung in Schritt S2 lokal kein geeignetes Mikrocode-Paket und auch in der optional vorhandenen Überprüfung gemäß Schritt S6 im Internet gefunden wird, so wird eine Fehlermeldung in einem Schritt S8 ausgegeben, die eine fehlende Unterstützung des Applikationsprogramms durch die vorliegende Hardware-Plattform signalisiert.

Die Funktionsweise der vorliegenden Erfindung wird an Hand des nachfolgenden sehr konkreten Ausführungsbeispiels beschrieben.

Demzufolge wird in einem modifizierten Applikations-Ladeprogramm zunächst der Applikationstyp eines gestarteten Applikationsprogramms erfasst und der benötigte bzw. geeignete Mikrocode bzw. das Mikrocode-Paket mit dem Applikationsprogramm derart verknüpft, dass das Steuerprogramm des Betriebssystems den richtigen Mikrocode bzw. das richtige Mikrocode-Paket in den Mikroprozessor holen kann, sobald ein Umschalten auf ein neues Applikationsprogramm durchgeführt wird.

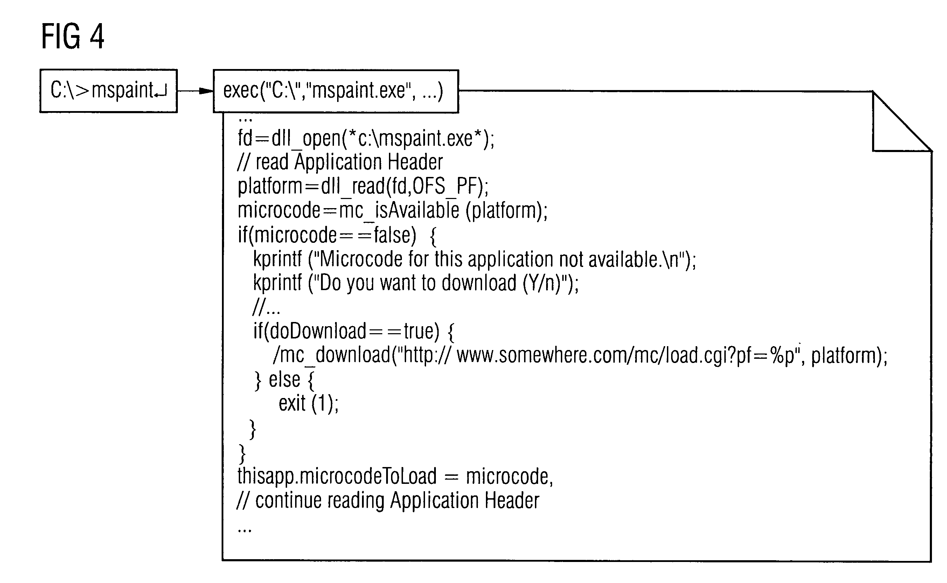

Das Applikations-Ladeprogramm kann hierbei die in Figur 4 dargestellte Form aufweisen.

Diese Funktionalität sollte hierbei auch Applikationsprogramme erfassen, die nicht nur ein sogenanntes Exe-Format oder DLL-Format aufweisen, sondern auch dem JAVA-Class-Format oder ELF-Format oder einem sonstigen Format entsprechen. Die Art dieser Erfassung ist dem Fachmann allgemein bekannt und wird üblicherweise aus dem Applikations-Header abgeleitet. Darüber hinaus besteht die Möglichkeit, diese Erfassungsroutine in einer sogenannten Plugin-Architektur zu realisieren, wobei eine neue Erfassungs-Sub-Routine hinzugefügt wird, sobald ein neues Mikrocode-Paket heruntergeladen oder in der Datenbank 5 gespeichert wird.

Ferner ist in dem Applikations-Ladeprogramm auch die Funktionalität zum Laden eines Mikrocode-Pakets aus dem Internet angegeben. Demzufolge kann eine Verbindung zu einem Internet-bzw. Web-Dienst hergestellt werden, sobald das in Figur 4 dargestellte Applikations-Ladeprogramm kein geeignetes Mikrocode-Paket findet, und sendet einige Kilobytes des Applikationsprogramms beispielsweise die ersten zwei Kilobytes an einen geeigneten Internet-Dienst, der dann seinerseits den Typ des Mikrocode-Pakets angibt bzw. antwortet und gegebenenfalls ein entsprechendes Mikrocode-Paket zur Verfügung stellt oder eine Bezugsquelle angibt.

Sobald das Steuerprogramm des Betriebssystems einen Kontext-Wechsel zur vorher definierten Applikation durchführt, wird zunächst eine Struktureingabe "MicrocodeToLoad" überprüft, um das geeignete Mikrocode-Paket zu ermitteln, und ferner eine Überprüfung durchgeführt, ob das Mikrocode-Paket nicht bereits in einem der Microcode-Prefetch-Slots läuft bzw. abgelegt ist. Ist dies nicht der Fall, so würde ein Mikrocode-Paket ausgelagert und das geeignete Mikrocode-Paket geladen werden, um anschließend das Applikationsprogramm zu starten bzw. das Abarbeiten des Applikationsprogramms zu veranlassen.

Jedes Mal, wenn ein neues Mikrocode-Paket geladen wird, erfolgt eine Initialisierungsprozedur zum Ändern der Konfiguration der peripheren Geräteeinheiten, wobei beispielsweise ein Bus-Design entsprechend umkonfiguriert wird. Um beispielsweise eine Hardware-Plattform zu erzeugen, die sogenannte XScale-Applikationsprogramme sowie Draggonball- oder JAVA-Applikationsprogramme unterstützt, muss das Bus-Design neu konfiguriert werden, um die benötigte Hardware-Konfiguration den darüberliegenden Schichten anzubieten.

Die Erfindung wurde vorstehend an Hand eines Pentium® III-Mikroprozessors zur Realisierung einer Hardware-Plattform beschrieben. Sie ist jedoch nicht darauf beschränkt und umfasst in gleicher Weise alle weiteren mikroprogrammierbaren und Mikrocode-updatefähigen Mikroprozessoren zur Realisierung einer anpassungsfähigen Hardware-Plattform. In gleicher Weise ist die vorliegende Erfindung nicht auf die in der Beschreibung angegebenen Mikrocode-Pakete festgelegt, sondern umfasst in gleicher Weise auch alle weiteren Mikrocode-Pakete zur Umwandlung eines jeweiligen Assemblercodes in einen zugehörigen Mikrocode.

### Bezugszeichenliste

- 1: Hardware-Plattform
- 1A: Physikalische Geräte
- 1B: Mikrocode
- 1C: Assemblercode
- 2: Betriebssystem
- 2A bis 2C: Betriebssystemmodule
- 3: Applikationsprogramme
- 4: Applikations-Erfassungseinheit
- 5: Mikrocode-Datenbank
- 5A bis 5C: Mikrocode-Pakete
- 6: Mikrocode-Auswahleinheit
- 7: Telekommunikationsnetzwerk
- S0 bis S8: Verfahrensschritte

## Patentansprüche

1. Vorrichtung zur Anpassung einer Hardware-Plattform an beliebige Applikationsprogramme mit:
einem Betriebssystem (2) zum Vermitteln zwischen der Hardware-Plattform (1) und den Applikationsprogrammen (3);
einer Applikations-Erfassungseinheit (4) zum Erfassen eines jeweiligen Applikationstyps der Applikationsprogramme (3);
einer Mikrocode-Datenbank (5) zum Speichern einer Vielzahl von Mikrocode-Paketen (5A, 5B, 5C) für eine Vielzahl von Applikationstypen; und
einer Mikrocode-Auswahleinheit (6) zum Suchen eines geeigneten Mikrocode-Pakets in Abhängigkeit vom erfassten Applikationstyp,
Laden des geeigneten Mikrocode-Pakets zum Aktualisieren der Hardware-Plattform (1); und
Starten einer Abarbeitung des Applikationsprogramms vom erfassten Applikationstyp.

2. Vorrichtung nach Patentanspruch 1, **dadurch gekennzeichnet , dass** das Betriebssystem (2) eine Vielzahl von den jeweiligen Applikationstypen entsprechenden Betriebssystemmodulen (2A, 2B, 2C) aufweist und in Abhängigkeit vom erfassten Applikationstyp verwendet.

3. Vorrichtung nach Patentanspruch 1 oder 2, **dadurch gekennzeichnet , dass** die Hardware-Plattform (1) als physikalisches Gerät (1A) einen Mikrocode-updatefähigen Prozessor aufweist.

4. Vorrichtung nach einem der Patentansprüche 1 bis 3, **dadurch gekennzeichnet , dass** die Mikrocode-Pakete (5A, 5B, 5C) eine Zuordnung einer Vielzahl von Assemblercodes (i286, ARM, MIPS) zu einem vorgegebenen Mikrocode (P III) realisieren.

5. Vorrichtung nach einem der Patentansprüche 1 bis 4, **dadurch gekennzeichnet , dass** die Mikrocode-Auswahleinheit (6) ein geeignetes Mikrocode-Paket über ein Telekommunikationsnetzwerk (7) sucht und lädt, wenn die Mikrocode-Datenbank (5) kein geeignetes Mikrocode-Paket aufweist.

6. Vorrichtung nach einem der Patentansprüche 1 bis 5, **dadurch gekennzeichnet , dass** die Mikrocode-Auswahleinheit (6) das geeignete Mikrocode-Paket (5A, 5B, 5C) dynamisch in Abhängigkeit von einem als Nächstes abzuarbeitendes Applikationsprogramm auf der Hardware-Plattform (1) aktualisiert.

7. Vorrichtung nach einem der Patentansprüche 1 bis 6, **dadurch gekennzeichnet , dass** die Applikations-Erfassungseinheit (4) den Applikationstyp an Hand der Verwaltungsdaten des Applikationsprogramms bestimmt.

8. Vorrichtung nach einem der Patentansprüche 1 bis 7, **dadurch gekennzeichnet , dass** die Hardware-Plattform (1) ein rekonfigurierbares Bus-Design aufweist, welches in Abhängigkeit vom Applikationstyp konfigurierbar ist.

9. Vorrichtung nach einem der Patentansprüche 1 bis 8, **dadurch gekennzeichnet , dass** sie in einem mobilen Telekommunikationsendgerät verwendet wird.

10. Verfahren zur Anpassung einer Hardware-Plattform an beliebige Applikationsprogramme mit den Schritten:
a) Erfassen eines Applikationstyps eines abzuarbeitenden Applikationsprogramms (S1);
b) Suchen eines geeigneten Mikrocode-Pakets in Abhängigkeit vom erfassten Applikationstyp (S2, S6);
c) Laden des geeigneten Mikrocode-Pakets zur Aktualisierung der Hardware-Plattform (S3, S7); und
d) Abarbeiten des Applikationsprogramms auf der aktualisierten Hardware-Plattform (S4).

11. Verfahren nach Patentanspruch 10, **dadurch gekennzeichnet , dass** in Schritt a) der Applikationstyp an Hand der Verwaltungsdaten des Applikationsprogramms erfasst wird.

12. Verfahren nach Patentanspruch 10 oder 11, **dadurch gekennzeichnet , dass** in Schritt b) das geeignete Mikrocode-Paket zunächst in einer internen Mikrocode-Datenbank (5) gesucht (S2) und von dort geladen wird (S3), wobei bei fehlender Eignung ferner über ein Telekommunikationsnetzwerk (7) gesucht (S6) und von dort geladen wird (S7).

13. Verfahren nach einem der Patentansprüche 10 bis 12, **dadurch gekennzeichnet , dass** nach Schritt b) eine Fehlermeldung ausgegeben wird (S8), wenn kein geeignetes Mikrocode-Paket gefunden wird.

14. Verfahren nach einem der Patentansprüche 10 bis 13, **dadurch gekennzeichnet , dass** in Schritt c) das geeignete Mikrocode-Paket in einen Mikrocode-updatefähigen Prozessor geladen wird.

15. Verfahren nach einem der Patentansprüche 10 bis 14, **dadurch gekennzeichnet , dass** in Schritt c) ferner ein rekonfigurierbares Bus-Design in Abhängigkeit vom Applikationstyp konfiguriert wird.

16. Verfahren nach einem der Patentansprüche 10 bis 15, **dadurch gekennzeichnet , dass** der Schritt c) dynamisch in Abhängigkeit von einem als Nächstes abzuarbeitendes Applikationsprogramm durchgeführt wird.

17. Verfahren nach einem der Patentansprüche 10 bis 16, **dadurch gekennzeichnet , dass** die Mikrocode-Pakete (5A, 5B, 5C) eine Zuordnung einer Vielzahl von Assemblercodes (i 286, ARM, MIPS) zu einem vorgegebenen Mikrocode (P III) realisieren.
